# EUROPEAN PATENT APPLICATION

(11) **EP 2 916 263 A2**
(43) Date of publication of application: **09.09.2015**
(21) Application number: 15157273.2
(22) Date of filing: 03.03.2015
(51) Int. Cl.: G06K 9/00

(54) **Method and system for providing and obtaining information along a vehicles track**

(30) Priority: 03.03.2014 SE 1450233
(71) Applicant: Scania CV AB, 151 87 Södertälje (SE)
(72) Inventor: Salmén, Mikael, 147 63 Uttran (SE); Ullberg, Carl-Fredrik, 126 47 Hägersten (SE); Lindberg, Mikael, 171 42 Solna (SE); Claesson, Fredrich, 139 53 Värmdö (SE)

(57) **Abstract**

The present invention relates to a method for providing and acquiring information along a vehicle's itinerary. The method comprises the step of using sensor means to scan (S1) information provided by at least one information means. The method further comprises the steps of using the sensor means to activate (S2) said information means by illumination and using the sensor means to extract (S3) information thus activated from said information means as a basis for the operation of the vehicle, said information means having at least one reflecting surface which is scanned by said sensor means.

The present invention relates to a system for providing and acquiring information along a vehicle's itinerary, and a motor vehicle provided with such a system. The present invention relates also to a computer programme and a computer programme product.

## Description

### TECHNIAL FIELD

The invention relates to a method for providing and acquiring information along a vehicle's itinerary according to the preamble of claim 1. The invention relates also to a system for providing and acquiring information along a vehicle's itinerary. The invention relates also to a motor vehicle. The invention relates also to a computer programme and a computer programme product.

### BACKGROUND

In certain situations, e.g. in a mining environment, within or outside the actual mine or in a tunnel, it may be difficult to follow a road without using further equipment for guiding the vehicle.

Cameras may with advantage be used for providing and acquiring information along a vehicle's itinerary in order thereby to determine the extent of the itinerary and thereby guide the vehicle.

A problem in such situations is that the vehicle's navigation depends on local information about the surroundings along the vehicle's itinerary, since no GPS information will be available.

Another problem is that certain surroundings in mining environments are of very low reflectivity, as in coal mines, and active cameras which depend on the reflection of light will not work properly in such conditions and therefore not provide satisfactory assistance for guiding the vehicle.

### OBJECT OF THE INVENTION

One object of the present invention is to propose a method and a system for providing and acquiring information along a vehicle's itinerary which make safe and effective navigation for operating the vehicle possible even in situations such as mining environments in which conventional navigation techniques do not work or are not available.

### SUMMARY OF THE INVENTION

These and other objects indicated by the description set out below are achieved by a method, a system, a motor vehicle, a computer programme and a computer programme product of the kinds indicated in the introduction which further present the features indicated in the characterising parts of the attached independent claims. Preferred embodiments of the method and the system are defined in the attached dependent claims.

The invention achieves the objects with a method for providing and acquiring information along a vehicle's itinerary, comprising the step of using sensor means to scan information provided by at least one information means, comprising the steps of i) using the sensor means to activate said information means by illumination and ii) using the sensor means to extract information thus activated from said information means as a basis for the operation of the vehicle, which information means has at least one reflecting surface which is scanned by said sensor means. Safe and effective navigation for operating the vehicle is thus made possible even in situations such as mining environments in which conventional navigation techniques do not work or are not available.

In one embodiment the method comprises the step of using reflecting surfaces of said information means to create patterns of desired information which are extractable by the sensor means, thus making it possible to access any suitable information for facilitating the operation of the vehicle.

In one embodiment the method comprises the step of varying said desired information by varying the pattern of said reflecting surfaces. This makes it possible to adapt the information, resulting in yet safer and more effective navigation for operating the vehicle, e.g. where there are changes in conditions such as altered and/or added itineraries in a mine, altered and/or added loading/unloading points, speed changes or the like.

In one embodiment the method comprises the step of varying said pattern in a controlled way in order to change said desired information, resulting in the possibility of easily and effectively changing the information by means of an electronic control unit whereby control may be exercised externally and/or from the respective vehicle.

In one embodiment the method comprises the step of varying the extractability of said desired information by varying the reflectability of said reflecting surfaces, thereby making it possible to limit the distance from which information can be extracted from the information means, which may for example be advantageous if information means such as road signs are close together but information is desired from only one information means at a time.

In one embodiment of the method said illumination is by infrared and/or visible light. Infrared light is less sensitive to interference, but visible light results in a simpler and more cost-effective configuration.

In one embodiment of the method said sensor means comprises a so-called 3D camera which may be used to recreate a 3D image of the surroundings in order to facilitate navigation for operating the vehicle.

In one embodiment the method comprises the step of using an electronic control unit of the vehicle to process said extracted information as a basis for operating the vehicle, thus further improving the navigation for the operation of the vehicle.

The embodiments for the system present similar advantages to the corresponding embodiments for the method mentioned above.

### DESCRIPTION OF DRAWINGS

The present invention will be better understood by reading the detailed description set out below in conjunction with the attached drawings, in which the same reference notations are used for similar items throughout the various views, and
Fig 1 illustrates schematically a motor vehicle according to an embodiment of the present invention,
Fig. 2 illustrates schematically a flowchart of a system for providing and acquiring information along a vehicle's itinerary according to an embodiment of the present invention,
Fig. 3 illustrates schematically a front view of an information means suited to scanning by sensor means according to an embodiment of the present invention,
Fig. 4 illustrates schematically a side view of an information means suited to scanning by sensor means according to an embodiment of the present invention,
Fig. 5 illustrates schematically a perspective view of an information means suited to scanning by sensor means according to an embodiment of the present invention,
Fig. 6 illustrates schematically a perspective view of an information means suited to scanning by sensor means according to an embodiment of the present invention,
Fig. 7 illustrates schematically a flowchart of a method for providing and acquiring information along a vehicle's itinerary according to an embodiment of the present invention, and
Fig. 8 illustrates schematically a computer according to an embodiment of the present invention.

### DESCRIPTION OF EMBODIMENTS

The term "link" refers herein to a communication link which may be a physical line such as an opto-electronic communication line, or a non-physical line such as a wireless connection, e.g. a radio link or microwave link.

The term "3D camera" refers herein to a camera with an active light source, preferably a source of infrared light, suited to scanning of light reflected from illumination by the light source, in order thereby to read depth and produce a 3D image.

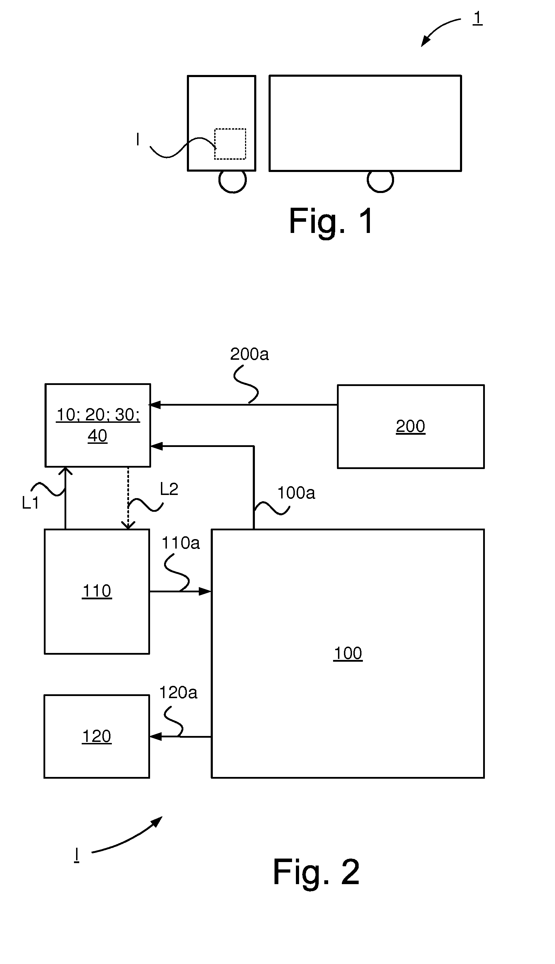

Fig. 1 illustrates schematically a motor vehicle 1 according to an embodiment of the present invention. The vehicle exemplified is a heavy vehicle in the form of a truck. In one variant it takes the form of a mining vehicle. The vehicle may alternatively be a bus or a car. The vehicle is provided with a system I for providing and acquiring information along a vehicle's itinerary according to the present invention.

Fig. 2 illustrates schematically a flowchart of a system I for providing and acquiring information along a vehicle's itinerary according to an embodiment of the present invention.

The system I comprises an electronic control unit 100, 200.

The system I comprises sensor means 110 for scanning of information provided by at least one information means 10; 20; 30; 40. The sensor means 110 is adapted to using illumination to activate the information means 10; 20; 30; 40 and extracting information thus activated from the information means as a basis for the operation of the vehicle. The information means 10; 20; 30; 40 comprises at least one reflecting surface. The sensor means 110 is adapted to scanning said at least one reflecting surface.

Activation of the information means 10; 20; 30; 40 by illumination by the sensor means 110 results in the information means 10; 20; 30; 40 being activated when information can be extracted from the information means 10; 20; 30; 40 by the sensor means, which is made possible when the information means is thus illuminated.

The sensor means 110 may take the form of any suitable sensor means for scanning of information provided by such an information means 10; 20; 30; 40.

The sensor means 110 comprises in one variant sensor means 110 for scanning by so-called time-of-flight (ToF) technology, which sensor means in one variant comprises camera means, LIDAR and/or RADAR. The sensor means 110 comprises any suitable sensor means which has active light L1 for illuminating and thereby activating the information means. The sensor means 110 comprises any suitable sensor means adapted to using illumination to scan information reflected from a reflecting surface. The sensor means 110 comprises in one embodiment means for illumination by infrared light L1. The sensor means comprises in one embodiment means for illumination by visible light L1.

Information from the information means 10; 20; 30; 40 is intended to be read by the sensor means 110, e.g. a camera means situated on the vehicle and provided with its own active illumination, which sensor means uses its illumination L1 to illuminate the information means 10; 20; 30; 40, which is sensitive to this illumination, whereupon the light L1 emitted from the sensor means is reflected from the information means, and the sensor means is adapted to reading and thereby converting the light L2 reflected from the information means to relevant information which may for example comprise positioning information.

The sensor means 110 comprises in one variant a camera means. The sensor means comprises in one embodiment a so-called 3D camera.

The information means 10; 20; 30; 40 may take the form of any suitable information means for providing and acquiring information along a vehicle's itinerary. The information means 10; 20; 30; 40 may take the form of any suitable information means 10; 20; 30; 40 which provides information which is reflectible by the sensor means 110.

The information means 10; 20; 30; 40 comprises in one embodiment any suitable means for deliberately drawing attention in the form of information to a specific location or locations along the vehicle's itinerary.

The information means 10; 20; 30; 40 comprises in one embodiment one or more road signs along the vehicle's itinerary. The information means 10; 20; 30; 40 comprises in one embodiment one or more pillars along the vehicle's itinerary. The information means 10; 20; 30; 40 comprises in one embodiment one or more road markings along the vehicle's itinerary. The information means 10; 20; 30; 40 comprises in one embodiment the road itself in that the road edge may serve as a basis for information about the extent of the road.

The information means 10; 20; 30; 40 comprises reflecting surfaces for achieving patterns containing desired information which are extractable by the sensor means 110. In one embodiment the pattern extractable by the sensor means 110 comprises a so-called QR code.

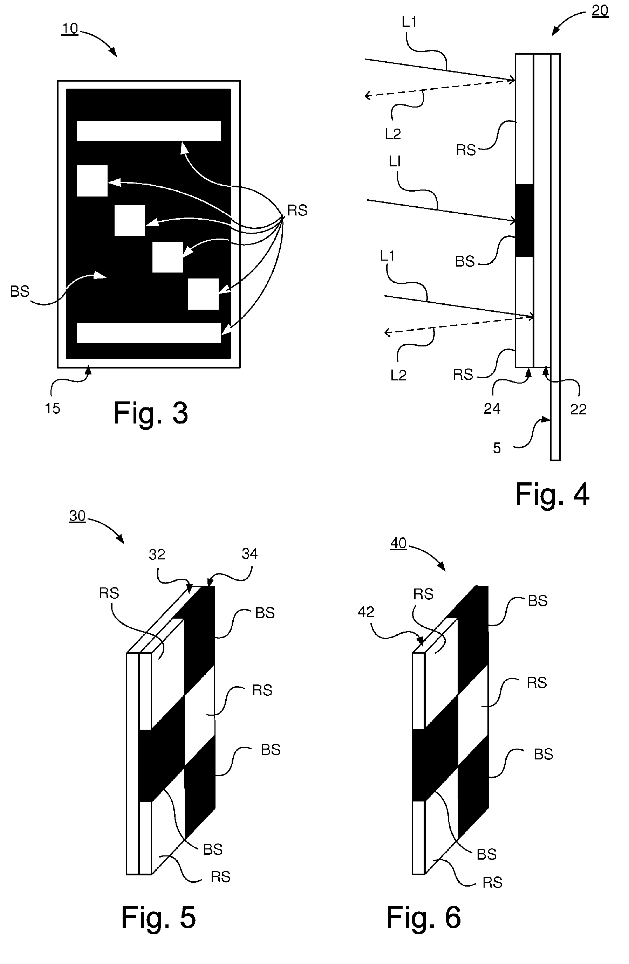

The system I comprises means 100; 200 for varying said desired information by varying the pattern of said reflecting surfaces. The information means 10; 20; 30; 40 has accordingly a variable pattern. In one variant the information means comprises a reflecting first layer and a second layer with a variable pattern. Such a layer takes in one variant the form of a so-called electronic shutter layer, a closing/closable layer, which is adapted to rendering a number of segments of the layer non-reflective, i.e. not permeable to the reflective layer, thereby creating a contrast difference between the reflective and non-reflective pixels so that for example a camera can read the resulting pattern. An example of such an information means is illustrated in Fig. 4.

The system I comprises means 100; 200 for varying the pattern of the information means 10; 20; 30; 40 in a controlled way in order to change the desired information.

The means 100; 200 for varying the pattern of the information means 10; 20; 30; 40 in a controlled way comprises in one variant an electronic control unit 100; 200 whereby control may be exercised externally by means of an external electronic control unit 200 and/or from the respective vehicle by means of an electronic control unit 100 on board the vehicle. The external control unit 200 may take the form of any suitable external control unit which is for example part of a server unit, a mobile telephone, a surfboard, a computer or the like, or be an integral part of the information means 10; 20; 30; 40, in which case the electronic control unit 200 might be programmed to alter the pattern of the information means according to a predetermined configuration or the like. The pattern/image to be presented of the information means may be based on data from outside wirelessly or from other vehicles or be built up elsewhere and be sent to the information means.

The information means 10; 20; 30; 40 comprises in one variant an LCD matrix whereby the means 100; 200 for controlling the pattern at pixel level controls which pixels are reflective and non-reflective, i.e. blocking, control being exercised by a voltage being imposed on a region and the crystals in the pixel changing polarity to let light pass through for reflection or to block light. This involves using the principle of an LCD TV.

The system I comprises means 100; 200 for varying the extractability of said desired information by varying the reflectability of said reflecting surfaces. This involves varying the degree of reflectivity of the reflecting surfaces in order thereby to adapt the distance from which information can be extracted from the information means. The information means 10; 20; 30; 40 is provided accordingly with a reflecting first layer whose degree of reflectivity is variable and a second layer with a pattern which may be variable or non-variable.

The system I comprises means 100; 200 for varying in a controlled way the reflectability of the information means 10; 20; 30; 40 in order thereby to be able to adapt the distance from which the sensor means 110 can extract information from the information means by illumination for activation of information from the information means.

The means 100; 200 for varying in a controlled way the reflectability of the information means 10; 20; 30; 40 comprises in one variant an electronic control unit 100; 200 whereby control may be exercised externally by means of an external electronic control unit 200 and/or from the respective vehicle by means of an electronic control unit 100 on board the vehicle. The external control unit 200 may take the form of any suitable external control unit which is for example part of a server unit, a mobile telephone, a surfboard, a computer or the like, or be an integral part of the information means 10; 20; 30; 40, in which case the electronic control unit 200 might be programmed to alter the reflectability of the information means.

By varying the reflectability it is thus possible to limit the distance from which information can be extracted from the information means, which may for example be advantageous if information means such as road signs are close together but information is desired from only one information means at a time.

The system I comprises in one variant means 120 for presenting information from the information means. The means 120 for presenting information comprises in one variant means for visual presentation such as a display unit for presentation of text, symbols, image reproduction, flashing or continuous light or the like, and/or means for auditory information in the form of spoken information, acoustic alarms or the like, and/or tactile information such as vibration in a steering wheel, driving seat, brake pedal, accelerator pedal or the like.

The sensor means 110 is adapted to using illumination of the information means 10; 20; 30; 40 to send light signals L1, in one variant in the form of infrared light, to the information means 10; 20; 30; 40 for activation of the information means 10; 20; 30; 40, whereupon reflecting surfaces of the information means 10; 20; 30; 40 will reflect the light signals in the form of a reflected signal L2.

The sensor means 110 is adapted to extractingly receiving a signal from the information means 10; 20; 30; 40 in the form of the reflected signal L2 representing information data extracted from the information means 10; 20; 30; 40.

The electronic control unit 100 is signal-connected via a link 100a to the sensor means 110 in order to scan information provided by at least one information means 10; 20; 30; 40. The electronic control unit 100 is adapted to receiving from the sensor means 110 via the link 110a a signal which represents extracted information from the information means 10; 20; 30; 40, as a basis for the operation of the vehicle.

The electronic control unit 100 is signal-connected via a link 120a to the means 120 for presenting information from the information means 10; 20; 30; 40. The electronic control unit 100 is adapted to sending via the link 120a to the means for presenting information a signal which represents information data for extracted information from the information means, as a basis for the operation of the vehicle.

The electronic control unit 100, i.e. the internal electronic control unit on board the vehicle, is in one variant signal-connected via a link 100a to the information means 10; 20; 30; 40 in order to vary said desired information by varying the pattern of said reflecting surfaces of the information means 10; 20; 30; 40. The electronic control unit 100 is adapted to sending to the information means 10; 20; 30; 40 via the link 100a a signal which represents data for the desired pattern of desired extractable information provided by the information means 10; 20; 30; 40.

The electronic control unit 200, i.e. the external electronic control unit, is in one variant signal-connected via a link 200a to the information means 10; 20; 30; 40 in order to vary said desired information by varying the pattern of said reflecting surfaces of the information means 10; 20; 30; 40. The electronic control unit 200 is adapted to sending to the information means 10; 20; 30; 40 via the link 200a a signal which represents data for the desired pattern of desired extractable information provided by the information means 10; 20; 30; 40.

The electronic control unit 100, i.e. the internal electronic control unit 100 on board the vehicle, is in one variant signal-connected via a link 100a to the information means 10; 20; 30; 40 in order to vary the extractability of said desired information by varying the reflectability of said reflecting surfaces of the information means 10; 20; 30; 40. The electronic control unit 100 is adapted to sending to the information means 10; 20; 30; 40 via the link 100a a signal which represents data for desired reflectability, i.e. desired degree of reflection, of the reflecting layer.

The electronic control unit 200, i.e. the external electronic control unit, is in one variant signal-connected via a link 200a to the information means 10; 20; 30; 40 in order to vary the extractability of said desired information by varying the reflectability of said reflecting surfaces of the information means 10; 20; 30; 40. The electronic control unit 200 is adapted to sending to the information means 10; 20; 30; 40 via the link 200a a signal which represents data for desired reflectability, i.e. desired degree of reflection, of the reflecting layer.

Fig. 3 illustrates schematically a front view of an information means 10 suited to scanning by sensor means according to an embodiment of the present invention.

The information means 10 according to Fig. 3 presents reflecting surfaces/segments RS and non-reflecting surfaces/segments BS forming a pattern which provides desired information extractable by the sensor means. The information provided by the pattern of surfaces/segments RS, BS takes the form in one embodiment of so-called QR code. Such a pattern may be achieved in any suitable way. In one variant an adhesive patch with information in the form of a desired pattern is applied to a surface which is part of the information means 10, which pattern in one variant takes the form of a so-called QR code.

In one embodiment the pattern is variable in order thereby to be able to vary the information, e.g. as described in relation to Fig. 4.

An information means 10 with a variable pattern is provided accordingly with means for varying the information by varying the pattern. Such a means for varying the pattern is suited in one variant to turning the information means 10 down by turning down the reflecting surfaces/segments RS. In one variant the information means 10 is provided with identification means 15 for identifying it, in order thereby to be able to determine that an information means is situated along the vehicle's itinerary even when it is inactive and no information is extractable from the information means. The identification means 15 comprises in one variant a reflecting surface which in one embodiment takes the form of a surrounding frame 15 which can be scanned by the sensor means, making it possible to determine the distance from the information means 10, e.g. a road sign along the vehicle's itinerary.

Fig. 4 illustrates schematically a side view of an information means 20 suited to scanning by sensor means according to an embodiment of the present invention.

The information means 20 in this embodiment is intended to be supported by a support means 5 which may take the form of any suitable means for supporting the information means, e.g. a highway post/pillar for supporting an information means in the form of a marker or road sign.

The information means 20 in this embodiment comprises a translucent first layer 22 and an electronically closable second layer 24, a so-called electronic shutter layer, situated externally to the first layer 22. The second layer 24 thus takes the form of a layer with a variable pattern.

The pattern of the second layer is adapted to being varied by control means, e.g. by applying voltage to segments RS, BS in order thereby to control which segments RS are to let light from the sensor means pass through so that the light is reflected by the surface of the reflecting first layer 22, and which segments BS are not to let light pass through, so that desired information can thereby be extracted by the sensor means. Thus certain segments RS are activated to let light pass through so that it can be reflected, and certain segments BS are deactivated so that light is blocked, making it possible for certain desired information to be extractable by the sensor means.

The information means 20 thus receives from the sensor means incoming light L1 which is allowed to pass through the translucent segments/surfaces RS so that it is reflected by the reflecting layer 22 in the form of reflected light L2 for scanning by the sensor means, in order thereby to determine information extracted from the information means 20.

The reflecting layer 22 may take the form of any suitable reflecting layer such as a layer with a mirror surface. The reflecting layer 22 will be appropriate to the signal carrier/light.

Fig. 5 illustrates schematically a perspective view of an information means 30 suited to scanning by sensor means, according to an embodiment of the present invention.

The information means 30 comprises in this embodiment a reflecting first layer 32 and a second layer 34 situated externally to the first layer 32. The second layer 34 may take the form of a layer with a non-variable pattern in the form of surfaces/segments RS, BS, such that certain surfaces/segments RS are translucent and certain surfaces/segments BS are non-translucent, so that information may be extracted by the sensor means by illumination of the information means 30 and scanning of reflected light. In one variant such a layer with a non-variable pattern is interchangeable. The second layer might also take the form of a layer with a variable pattern.

Fig. 6 illustrates schematically a perspective view of an information means 40 suited to scanning by sensor means, according to an embodiment of the present invention.

The information means 40 comprises in this embodiment a single layer 42 with a non-variable pattern in the form of surfaces/segments RS, BS, such that certain surfaces/segments RS reflect light and certain surfaces/segments BS block light, so that information can be extracted by the sensor means by illumination of the information means 40 and scanning of reflected light. An information means with only one layer allows a more compact configuration. In one variant such an information means 40 has only one layer with a variable pattern whereby the segments of the layer can be switched between reflective and non-reflective, i.e. each segment/point has two states, which in one variant is achieved by some form of voltage difference or mechanical action/energy effect. In one variant such an information means 40 with only one layer comprises a mechanical configuration whereby a segment/point is rotatable about its own axis such that one side is reflective and the other is non-reflective to the light signal/signal carrier.

In one variant of the present invention the pattern of the information means in one or more of the embodiments described with reference to Figs. 3, 4, 5, and 6 and/or of information means according to a further embodiment is three-dimensional with greater capability for storage of data/information.

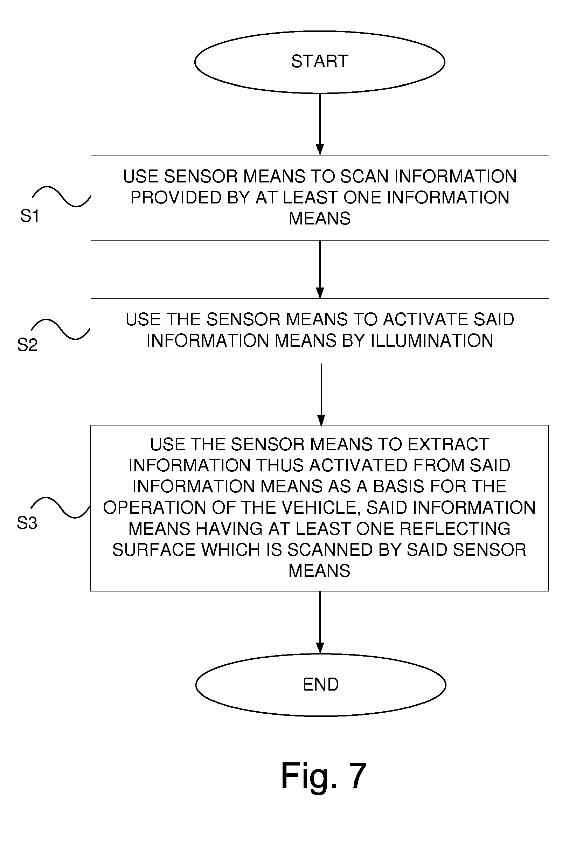

Fig. 7 illustrates schematically a block diagram of a method for providing and acquiring information along a vehicle's itinerary according to an embodiment of the present invention.

In one embodiment the method for providing and acquiring information along a vehicle's itinerary comprises a first step S1 in which sensor means scan information provided by at least one information means.

In one embodiment the method for providing and acquiring information along a vehicle's itinerary comprises a second step S2 in which said information means is activated by the sensor means by illumination.

In one embodiment the method for providing and acquiring information along a vehicle's itinerary comprises a third step S3 in which information thus activated from said information means is extracted as a basis for the operation of the vehicle, and said information means has at least one reflecting surface which is scanned by said sensor means.

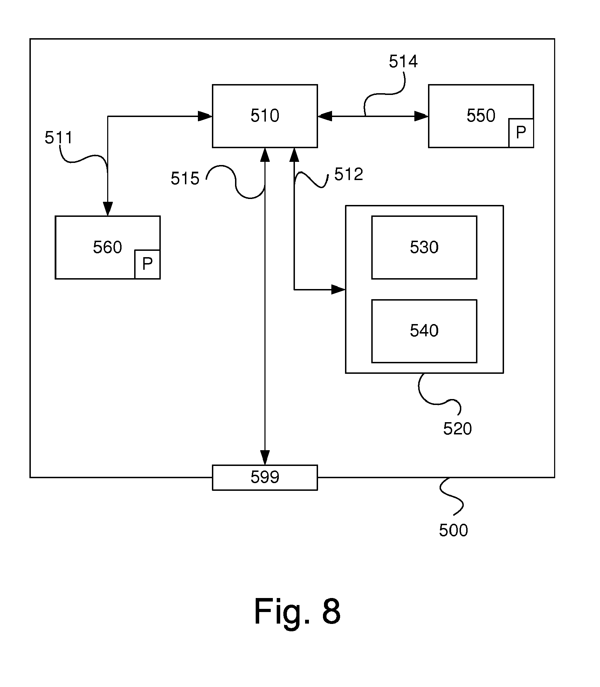

Fig. 8 is a diagram of one version of a device 500. The control unit 100 described with reference to Fig. 2 may in one version comprise the device 500 which itself comprises a non-volatile memory 520, a data processing unit 510 and a read/write memory 550. The non-volatile memory 520 has a first memory element 530 in which a computer programme, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

A proposed computer programme P comprises routines for providing and acquiring information along a vehicle's itinerary according to the innovative method. The programme comprises routines for using sensor means to scan information provided by at least one information means. The programme comprises routines for activation of said information means by illumination by the sensor means. The programme comprises routines for using the sensor means to extract information thus activated from said information means as a basis for the operation of the vehicle, and said information means has at least one reflecting surface which is scanned by said sensor means. The programme P may be stored in an executable form or in compressed form in a memory 560 and/or in a read/write memory 550.

Where the data processing unit 510 is described as performing a certain function, it means that the data processing unit conducts a certain part of the programme stored in the memory 560 or a certain part of the programme stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit via a data bus 511. The read/write memory 550 is adapted to communicating with the data processing unit via a data bus 514. The links associated with the control units 100; 200 may for example be connected to the data port.

When data are received on the data port 599, they are stored temporarily in the second memory element 540. When input data received have been temporarily stored, the data processing unit 510 will be prepared to conduct code execution as described above. The signals received on the data port may be used by the device 500 for causing the sensor means to activate said information means by illumination. The signals received on the data port may be used by the device 500 to cause said information means to be activated by the sensor means by illumination. The signals received on the data port may be used by the device 500 to cause the sensor means to extract information thus activated from said information means as a basis for the operation of the vehicle, said information means having at least one reflecting surface which is scanned by said sensor means.

Parts of the methods herein described may be conducted by the device 500 by means of the data processing unit 510 which runs the programme stored in the memory 560 or the read/write memory 550. When the device 500 runs the programme, methods herein described are executed.

The above description of the preferred embodiments of the present invention is provided for illustrative and descriptive purposes. It is not intended to be exhaustive, nor to restrict the invention to the variants described. Many modifications and variations will obviously suggest themselves to one skilled in the art. The embodiments have been chosen and described in order best to explain the principles of the invention and their practical applications and thus make it possible for one skilled in the art to understand the invention for different embodiments and with the various modifications appropriate to the intended use.

## Claims

1. A method for providing and acquiring information along a vehicle's itinerary, comprising the step of using sensor means (110) to scan (S1) information provided by at least one information means (10; 20; 30; 40), **characterised by** the steps of
- using the sensor means (110) to activate (S2) said information means (10; 20; 30; 40) by illumination and
- using the sensor means (110) to extract (S3) information thus activated from said information means (10; 20; 30; 40) as a basis for the operation of the vehicle, said information means (10; 20; 30; 40) having at least one reflecting surface which is scanned by said sensor means (110).

2. A method according to claim 1, comprising the step of using reflecting surfaces (RS) of said information means (10; 20; 30; 40) to achieve patterns which provide desired information and are extractable by the sensor means (110).

3. A method according to claim 2, comprising the step of varying said desired information by varying the pattern of said reflecting surfaces (RS).

4. A method according to claim 3, comprising the step of varying said pattern in a controlled way in order to change said desired information.

5. A method according to any one of claims 2-4, comprising the step of varying the extractability of said desired information by varying the reflectability of said reflecting surfaces (RS).

6. A method according to any one of claims 1-5, in which said illumination is by infrared and/or visible light.

7. A method according to any one of claims 1-6, in which said sensor means (110) comprises a so-called 3D camera.

8. A method according to any one of claims 1-7, comprising the step of processing said extracted information by means of an electronic control unit (100) of the vehicle as a basis for the operation of the vehicle.

9. A system (I) for providing and acquiring information along a vehicle's itinerary of a vehicle (1), comprising sensor means (110) for scanning of information provided by at least one information means (10; 20; 30; 40), **characterised in that** the sensor means (110) is adapted to activating said information means (10; 20; 30; 40) by illumination and to extracting information thus activated from said information means (10; 20; 30; 40) as a basis for the operation of the vehicle, said information means (10; 20; 30; 40) having at least one reflecting surface (RS) suited to being scanned by said sensor means (110).

10. A system according to claim 9, in which said information means (10; 20; 30; 40) has reflecting surfaces (RS) for achieving patterns which provide desired information and are extractable by the sensor means.

11. A system according to claim 10, comprising means (100; 200; 10; 20; 30; 40) for varying said desired information by varying the pattern of said reflecting surfaces (RS).

12. A system according to claim 11, comprising means (100; 200; 10; 20; 30) for varying said pattern in a controlled way in order to change said desired information.

13. A system according to any one of claims 9-12, comprising means for varying the extractability of said desired information by varying the reflectability of said reflecting surfaces (RS).

14. A system according to any one of claims 9-13, in which said sensor means (110) comprises means for illumination by infrared and/or visible light (L1).

15. A system according to any one of claims 9-14, in which said sensor means (110) comprises a so-called 3D camera.

16. A system according to any one of claims 9-15, comprising an electronic control unit (100) of the vehicle which is adapted to processing said extracted information as a basis for the operation of the vehicle.

17. A motor vehicle provided with a system (I) according to any one of claims 9-16.

18. A computer programme (P) for providing and acquiring information along a vehicle's itinerary, which programme (P) comprises programme code which, when run by an electronic control unit (100) or another computer (500) connected to the electronic control unit (100), enables the electronic control unit to perform steps according to claims 1-8.

19. A computer programme product provided with a digital storage medium which stores the computer programme according to claim 18.
